# EUROPEAN PATENT APPLICATION

(11) **EP 4 607 815 A1**
(43) Date of publication of application: **27.08.2025**
(21) Application number: 23919496.2
(22) Date of filing: 11.12.2023
(51) Int. Cl.: H04B 7/06

(54) **COMMUNICATION APPARATUS, COMMUNICATION METHOD, ELECTRONIC DEVICE, AND STORAGE MEDIUM**

(30) Priority: 03.02.2023 CN 202310126700
(71) Applicant: ZTE Corporation, Shenzhen, Guangdong 518057 (CN)
(72) Inventor: YANG, Jun, Shenzhen, Guangdong 518057 (CN); CHEN, Yijian, Shenzhen, Guangdong 518057 (CN); JIAN, Mengnan, Shenzhen, Guangdong 518057 (CN); YU, Hongkang, Shenzhen, Guangdong 518057 (CN)
(74) Representative: Ziebig Hengelhaupt Intellectual Property Attorneys Patentanwaltskanzlei PartGmbB
(86) International application number: PCT/CN2023/137972
(87) International publication number: WO 2024/159933

(57) **Abstract**

The present application relates to the technical field of communications, and provides a communication apparatus, a communication method, an electronic device, and a storage medium, for use in improving the signal transmission distance of backscatter communication. The communication apparatus comprises: an antenna module comprising N antenna units used for transmitting and receiving electromagnetic signals; a signal comparison module coupled to the antenna module, and configured to: detect the received signal strength of each of the N antenna units, and on the basis of the received signal strength of each of the N antenna units, select M target antenna units having the strongest received signal strength from among the N antenna units; and a signal switching module coupled both to the signal comparison module and the antenna module, and configured to: receive information output by the signal comparison module and used for indicating the M target antenna units, and on the basis of the information used for indicating the M target antenna units, select the M target antenna units to transmit the electromagnetic signals.

## Description

The present disclosure claims a priority to Chinese Patent Application No. 202310126700.4, filed on February 03, 2023, which is hereby incorporated by reference in its entirety.

### TECHNICAL FIELD

The present disclosure relates to the technical field of communication, and in particular, to a communication apparatus, a communication method, an electronic device, and a storage medium.

### BACKGROUND

With the rapid development of the information industry, applications of the Internet of Things (IoT) have become increasingly widespread. These examples include surveillance cameras, smart water meters, smart electricity meters, as well as various IoT application scenarios for smart cities, intelligent manufacturing, smart agriculture, and the like. In addition, in order to reduce the hardware costs, installation/maintenance costs of IoT devices, more and more IoT devices are adopting a manner of backscattering (also referred to as backscatter communication or retroreflective communication) for communication. By utilizing the backscattering technology, communication may be achieved by reflecting ambient electromagnetic waves, which offers advantages such as eliminating the need for connecting a power supply, saving battery costs, and featuring low power consumption and cost-effectiveness.

However, due to the generally weak signals in backscatter communication, a communication distance of the backscatter communication is limited.

### SUMMARY

The present disclosure provides a communication apparatus, a communication method, an electronic device and a storage medium for improving a signal transmission distance of backscatter communication.

In an aspect, there is provided a communication apparatus. The apparatus includes:
an antenna module, including N antenna units configured to transmit and receive an electromagnetic signal, where N is a positive integer greater than 1;
a signal comparison module, where the signal comparison module is coupled to the antenna module, and the signal comparison module is configured to: detect received signal strengths of respective antenna units among the N antenna units; and select M target antenna units with strongest received signal strengths from the N antenna units based on the received signal strengths of the respective antenna units among the N antenna units, where M is a positive integer less than or equal to N;
a signal switching module, where the signal switching module is coupled to the signal comparison module and the antenna module, respectively, and the signal switching module is configured to: receive information output by the signal comparison module for indicating the M target antenna units; and select the M target antenna units to transmit an electromagnetic signal based on the information for indicating the M target antenna units.

In another aspect, there is provided a communication method, where the method is applied to a communication apparatus, the communication apparatus includes N antenna units configured to transmit an electromagnetic signal, N is a positive integer greater than 1; the method includes: detecting received signal strengths of respective antenna units among the N antenna units; selecting M target antenna units with strongest received signal strengths from the N antenna units based on the received signal strengths of the respective antenna units among the N antenna units, where M is a positive integer less than or equal to N; transmitting a second signal through the M target antenna units.

In yet another aspect, there is provided another communication method, where the method is applied to a communication apparatus, the communication apparatus includes N antenna units configured to transmit an electromagnetic signal, N is a positive integer greater than 1; the method includes: detecting received signal strengths of respective antenna units among the N antenna units; selecting M target antenna units with strongest received signal strengths from the N antenna units based on the received signal strengths of the respective antenna units among the N antenna units, where M is a positive integer less than N; receiving a third signal through the M target antenna units; and converting the third signal into electrical energy and storing the electrical energy.

In yet another aspect, there is provided an electronic device, including: the communication apparatus according to any of above-mentioned embodiments.

In yet another aspect, there is provided a communication system, where the communication system includes at least one receiving end and at least one transmitting end, where the receiving end and/or the transmitting end includes the communication apparatus according to any of above-mentioned embodiments.

In yet another aspect, there is provided a computer-readable storage medium, where the computer-readable storage medium has computer instructions thereon, when the computer instructions are executed on a computer, the communication method according to any of the above-mentioned embodiments is implemented.

In yet another aspect, there is provided a computer program product, where the computer program product includes computer program instructions, when the computer program instructions are executed, the communication method according to any of the above-mentioned embodiments is implemented.

The communication apparatus is provided in the embodiments of the present disclosure, and the communication apparatus may determine and adjust the target antenna units for transmitting or receiving a signal based on the received signal strength, without the need for channel measurement and feedback. Beamforming of transmitted signals is achieved only by selecting the antenna units. Thereby, the computing resources, hardware cost and computing delay required for channel measurement and feedback are saved, and meanwhile, the transmission distance of backscattered signals can be improved.

In addition, the communication apparatus may be added with an energy management module, and based on the energy management module, received electromagnetic signals may be converted into electrical energy for storage. In this way, the stored electrical energy may then be used to supply power to the entire communication apparatus, thereby increasing the signal transmission power, and further improving the communication distance and communication capability of the backscatter communication.

### BRIEF DESCRIPTION OF THE DRAWINGS

The accompanying drawings are used to provide a further understanding of the technical solutions of the present disclosure, and is constituted as a part of the specification, which is used to explain the technical solutions of the present disclosure together with the embodiments of the present disclosure, and do not constitute a limitation on the technical solutions of the present disclosure.
FIG. 1 is a schematic diagram of an architecture of a backscatter communication system provided in the present disclosure.
FIG. 2 is a schematic diagram of a composition of a communication apparatus provided in the embodiments of the present disclosure.
FIG. 3 is a structural schematic diagram of an antenna module provided in the embodiments of the present disclosure.
FIG. 4 is a structural schematic diagram of another antenna module provided in the embodiments of the present disclosure.
FIG. 5 is a schematic diagram of a composition of another communication apparatus provided in the embodiments of the present disclosure.
FIG. 6 is a schematic diagram of a composition of yet another communication apparatus provided in the embodiments of the present disclosure.
FIG. 7 is a flowchart of a communication method provided in the embodiments of the present disclosure.
FIG. 8 is a flowchart of another communication method provided in the embodiments of the present disclosure.
FIG. 9 is a structural schematic diagram of an electronic device provided in the embodiments of the present disclosure.

### DETAILED DESCRIPTION

The technical solutions in the embodiments of the present disclosure will be described below clearly and completely in conjunction with the accompanying drawings. Obviously, the described embodiments are merely a part of the embodiments of the present disclosure, but not all of the embodiments of the present disclosure. All other embodiments obtained according to the embodiments of the present disclosure by those of ordinary skill in the art without paying any creative effort shall be included in the protection scope of the present disclosure.

It should be noted that all orientation indications (such as up, down, left, right, front, back, etc.) in the embodiments of the present disclosure are only used to explain relative position relationships, motion situations, etc., between various components under a certain specific posture (such as shown in an accompanying drawing). If the specific posture is changed, an orientation indication is changed with the changed posture correspondingly.

The terms "first", "second", etc., are merely used for a purpose of description, and are not to be understood as indicating or implying the relative importance or implicitly indicating the number of indicated technical features. Thus, features limited with the wordings of "first", "second", etc., may explicitly or implicitly include one or more of the features. In the description of the present disclosure, the terms of "multiple", "a plurality of" or "the plurality of" means a number of two or more than two.

In the description of the present disclosure, it should be noted that, unless otherwise clearly specified and limited, the terms "connect", "couple" or variations thereof should be understood in a broad sense. For example, a connection may be a fixed connection, or may also be a detachable connection, or an integral connection. For ordinary technical personnel in the art, the specific meanings of the above-mentioned terms in the present disclosure may be understood according to specific situations. In addition, when describing pipelines, the words "connect", "couple" or variations thereof used in the present disclosure have a meaning of conducting. The specific meaning needs to be understood in combination with the context.

In the embodiments of the present disclosure, wordings such as "exemplarily" or "for example" and variations thereof are used to indicate examples, instances, or illustrations. Any embodiment or design solution described with "exemplary" or "for example" and variations thereof in the present disclosure should not be illustrated as more preferred or advantageous embodiment or design solution over other embodiments or design solutions. Specifically, the usage of wordings such as "exemplarily" or "for example" is intended to present relevant concepts in a concrete way.

As described in the background, with the extensive application of Internet of Things technology in industrial production and people's daily life, there are more and more Internet of Things devices and their deployment is becoming more and more intensive. Therefore, deployment and maintenance costs become a new issue. In order to reduce hardware costs and installation/maintenance costs, more and more IoT devices use a manner of backscatter to perform communication.

However, since the antennas used in backscatter communication generally transmit signals omnidirectionally or directionally, flexible beam switching cannot be achieved, resulting in weak backscatter communication signals, the transmission distance being limited, and the communication rate being very low. Furthermore, in order to reduce power consumption, a terminal device for backscatter communication generally does not have a powerful signal processing unit, so it cannot implement relatively complex signal processing, nor does it have the capability of channel estimation and beamforming, resulting in a short communication distance.

Based on this, a communication apparatus is provided in the embodiments of the present disclosure, and the communication apparatus includes: an antenna module, which includes N antenna units configured to transmit and receive an electromagnetic signal, where N is a positive integer greater than 1; a signal comparison module, where the signal comparison module is coupled to the antenna module, and the signal comparison module is configured to: detect received signal strengths of respective antenna units among the N antenna units; and select M target antenna units with strongest received signal strengths from the N antenna units based on the received signal strengths of the respective antenna units among the N antenna units, where M is a positive integer less than or equal to N; a signal switching module, where the signal switching module is coupled to the signal comparison module and the antenna module, respectively, and the signal switching module is configured to: receive information output by the signal comparison module for indicating the M target antenna units; and select the M target antenna units to transmit an electromagnetic signal based on the information for indicating the M target antenna units. In this way, there is no need for channel measurement and feedback, and only the selection of antenna units is required to implement beamforming of transmitted signals. Therefore, the transmission distance of backscatter signals may be improved without increasing the hardware cost and power consumption of a backscatter terminal.

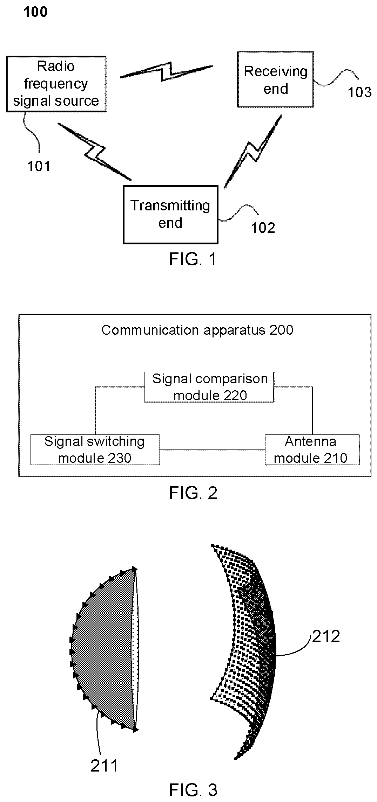

To facilitate understanding, a detailed introduction for the ambient backscatter technology is made as below first. Referring to FIG. 1, FIG. 1 is a schematic diagram of an architecture of a backscatter communication system (also referred to as a backscatter system) provided in embodiments of the present disclosure.

As shown in FIG. 1, the backscatter system 100 includes: a radio frequency signal source 101, a transmitting end 102 and a receiving end 103. In some embodiments, the transmitting end 102 and/or the receiving end 103 includes the communication apparatus provided in the above-mentioned embodiments of the present disclosure.

Herein, the radio frequency signal source 101 is an available environmental radio frequency source, such as a radio and television signal transmission tower, a mobile communication system base station, and a wireless fidelity (Wi-Fi) access point, a specific form of the radio frequency signal source is not limited in the present disclosure. Optionally, the radio frequency signal source 101 may send a wireless radio frequency signal within a communication frequency range.

The transmitting end 102 may also be referred to as a transmitting device. The transmitting end 102 includes at least one of the following: an electronic tag, a passive tag, a sensor, a terminal, a user equipment, a transmitter, or a backscatter communication node, etc. As an example, the transmitting end 102 may generate an induced current based on wireless radio frequency signals sent from the radio frequency signal source 101, thus entering a working state. As an example, the transmitting end 102 has two working states: reflecting and not reflecting. Transmission for different bits or different symbols may be implemented through different working states. For example, when a bit "0" is sent, a working state of not reflecting a signal may be entered, and when a bit "1" is sent, a working state of reflecting a signal may be entered. As an example, the transmitting end 102 may enter different working states by switching impedance, for example, the transmitting end 102 enters a state of reflecting a signal when the impedance is adjusted to completely mismatched, and the transmitting end 102 enters a state of not reflecting a signal or a state of receiving a signal when the impedance is adjusted to completely matched. Under the state of reflecting, different signals may also be reflected by switching impedances. For example, different signals may be reflected by two different impedances, to implement transmission for the symbol "1" or "-1".

The receiving end 103 may also be referred to as a receiving device. The receiving end 103 includes at least one of the following: a reader/writer, a card reader, a receiver, a receiving node, a receiving device, a base station, a network device, a backscatter communication terminal, or a backscatter communication device. As an example, the receiving end 103 may be configured to receive a signal sent from the radio frequency signal source 101 and/or a signal reflected from the transmitting end 102.

In some embodiments, the radio frequency signal source 101, the transmitting end 102 and the receiving end 103 may be deployed independently or may be deployed in combination as needed. For example, the radio frequency signal source 101 and the receiving end 103 may be deployed together, which is not specifically limited in the present disclosure.

In addition, a number of the above-mentioned radio frequency signal source(s) 101, the transmitting end(s) 102 or the receiving end(s) 103 in the backscattering system 100 may be one or more, which are not specifically limited in the present disclosure.

It should be noted that the backscatter communication system shown in FIG. 1 is merely for illustrating the technical solutions of the present disclosure more clearly, and does not constitute a limitation on the present disclosure. Those of ordinary skill in the art should know that, with the evolution of the network architecture and the emergence of new business scenarios, the technical solutions provided in the present disclosure are also applicable to similar technical problems.

The backscatter communication method provided in the embodiments of the present disclosure may be applied to systems of various communication standards, including but not limited to: a long term evolution (LTE) system, various versions evoluted based on LTE, 5th generation (5G) system, and new radio (NR), etc., and other next generation communication systems. In addition, the backscatter communication method provided in the embodiments of the present disclosure may further be applied to future-oriented communication technologies, etc.

For example, in future applications, the backscatter communication may be applied in cellular networks. For example, the transmitting end may be a base station (BS), and the receiving end may be a terminal device (e.g., a user equipment (UE)). Alternatively, the transmitting end is a terminal device and the receiving end is a base station.

The technical solutions provided in the present disclosure will be described in detail with reference to the accompanying drawings below.

As shown in FIG. 2, a communication apparatus 200 includes an antenna module 210, a signal comparison module 220 and a signal switching module 230. Furthermore, the signal comparison module 220 is coupled to the antenna module 210, and the signal switching module 230 is coupled to the signal comparison module 220 and the antenna module 210, respectively.

### Antenna Module 210

The antenna module 210 includes N antenna units configured to transmit or receive an electromagnetic signal, where N is a positive integer greater than 1.

In some embodiments, the antenna module 210 may satisfy a Rotman lens structure. Herein, the Rotman lens is a commonly used multi-beam forming network, which uses optical path differences from a beam port to various units on an antenna array to determine a beam pointing, and is a true time delay (TTD) beamformer. The beam pointing is independent of a working frequency, and the beam pointing remains fixed when the frequency changes, which may implement a wide frequency band.

As an example, as shown in FIG. 3, the antenna module 210 includes a first array 211 and a second array 212. The above-mentioned N antenna units are arranged in the first array 211, and the second array 212 includes K transmission units for changing a physical state of an electromagnetic signal, where K is a positive integer greater than 1, and a physical state of an electromagnetic signal includes one or more of: an amplitude, a phase, or a polarization direction.

It should be noted that the first array 211 is an active array, the second array 212 is a passive array, and transmission units on the second array 212 may control a directional propagation of electromagnetic signals emitted by various antenna units on the first array 211. Therefore, when different antenna units on the first array 211 are selected for transmitting an electromagnetic signal, beam directions of the electromagnetic signals transmitted to the external space by the antenna module 210 are different.

Herein, a transmission unit is a passive transmission unit, that is, the transmission unit does not have the capability to independently transmit an electromagnetic signal.

In some embodiments, the first array 211 and the second array 212 are at least partially arranged opposite to each other along a first direction, and a maximum interval between the first array 211 and the second array 212 is no more than 5 times of a maximum aperture of the second array 212, where the maximum aperture refers to a length of a line between two units with a furthest distance and on the second array 212. Herein, the first direction may be any direction.

In some embodiments, a surface where the first array 211 is located is a curved surface, and a surface where the second array 212 is located is also a curved surface. Alternatively, the surface where the first array 211 is located is a curved surface, and the surface where the second array 212 is located is a plane. Alternatively, the surface where the first array 211 is located is a plane, and the surface where the second array 212 is located is a curved surface. Alternatively, the surface where the first array 211 is located is a plane, and the surface where the second array 212 is located is also a plane.

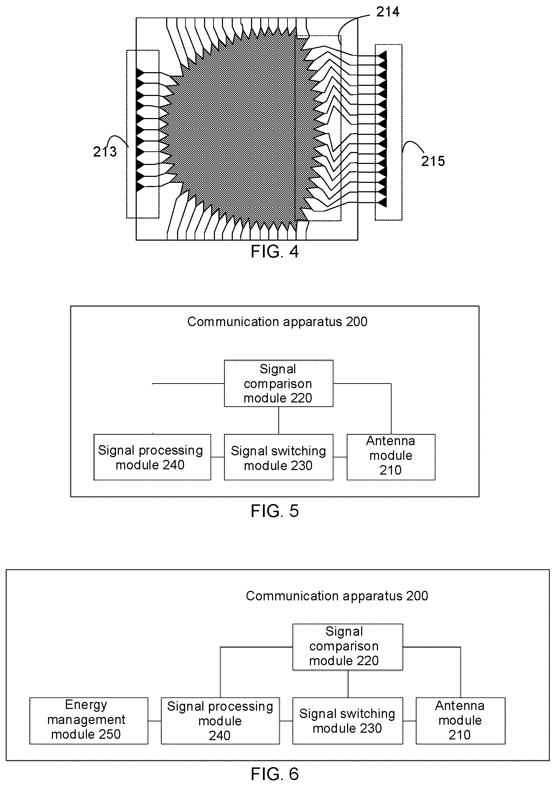

As another example, as shown in FIG. 4, the antenna module 210 includes a first function device 213, a second function device 214, and a third function device 215.

The above-mentioned N antenna units are arranged on the first function device 213. The second function device 214 includes L feed ports. The third function device 215 includes P antenna elements. L and P are both positive integers greater than 1. Each antenna element is coupled to a feed port through a delay line, and is configured to change a physical state of an electromagnetic signal received from the feed port. The physical state of the electromagnetic signal includes one or more of: an amplitude, a phase, and a polarization direction. Herein, the first function device 213, the second function device 214 and the third function device 215 are sequentially spaced in a first direction, and the second function device 214 is located between the first function device 213 and the third function device 215.

In some embodiments, in the first direction, the first function device 213 and the second function device 214 are at least partially arranged opposite to each other, i.e., a projection of the first function device 213 in the first direction is at least partially projected onto the second function device 214. The second function device 214 and the third function device 215 are at least partially arranged opposite to each other, i.e., a projection of the second function device 214 in the first direction is at least partially projected onto the third function device 215.

Based on the antenna module 210 shown in FIG. 4, an electromagnetic signal emitted by the antenna unit on the first function device 213 enters a feed port on the second function device 214 through a middle cavity of a structure shown in FIG. 4. Then, the electromagnetic signal received from the feed port may be emitted to the external space through the delay line after a physical state of the electromagnetic signal has been changed by the antenna element on the third function device 215. Therefore, when different antenna units on the first function device 213 are selected for transmitting an electromagnetic signal, the beam directions of the electromagnetic signals transmitted to the external space by the antenna module 210 are different.

In some embodiments, antenna units on the first function device 213 are located on the same plane, and feed ports on the second function device 214 are also located on the same plane.

In some other embodiments, the antenna units on the first function device 213 are not on the same plane, and the feed ports on the second function device 214 are not on the same plane.

In some embodiments, the third function device 215 has a planar or curved structure.

It should be noted that, based on the antenna module shown in FIG. 3 or FIG. 4, by monitoring received signal strengths of respective antenna units among the N antenna units, a direction of an incoming wave of the signal may be determined. Therefore, by selecting M target antenna units with the strongest signal strength to send a signal to the device sending the signal, a direction of an emitted beam is opposite to a direction of incoming wave, thereby implementing uplink and downlink communication.

### Signal Comparison Module 220

The signal comparison module 220 is configured to detect received signal strengths of respective antenna units among the N antenna units. Then, based on the received signal strengths of respective antenna units among the N antenna units, M target antenna units with the strongest received signal strengths are selected from the N antenna units. Herein, M is a positive integer less than or equal to N.

In some embodiments, the signal comparison module 220 may have at least one input port and at least one output port. Thus, the signal comparison module 220 may acquire the received signal strengths of respective antenna units among the N antenna units in the antenna module 210 through the at least one input port.

Exemplarily, the signal comparison module 220 may connect the at least one input port to the first array 211 in the antenna module as shown in FIG. 3, so that the received signal strengths of respective antenna units among the N antenna units in the first array may be acquired through the at least one input port. Alternatively, the signal comparison module 220 may further connect the at least one input port to the first function device 213 in the antenna module as shown in FIG. 4, so that the received signal strengths of respective antenna units among the N antenna units in the first function device may be acquired through the at least one input port.

In some embodiments, the signal comparison module 220 may compare peak values of signal strengths of the electromagnetic signals, where a peak value refers to a difference between a highest value and a lowest value of an electromagnetic signal, and is used to indicate a variation range of a value of the signal strength. Alternatively, the signal comparison module 220 may also compare average values of strengths of the electromagnetic signals. Herein, an average value refers to an average value of signal strength of an electromagnetic signal over a period of time. Furthermore, the signal comparison module 220 may select M target antenna units with the strongest received signal strength from the N antenna units based on a comparison result of the peak values of the signal strengths of the N antenna units or a comparison result of the average values of the signal strengths of the N antenna units.

In some embodiments, a received signal strength of an antenna unit may be represented by a voltage, a current or a power of an electromagnetic signal received by the antenna unit. Therefore, the signal comparison module 220 is specifically configured to acquire electromagnetic signals received by respective antenna units among the N antenna units, and compare voltages, currents or powers of the electromagnetic signals received by respective antenna units among the N antenna units.

Taking an example that a strength of an electromagnetic signal received by an antenna module is represented based on a current of the electromagnetic signal, the signal comparison module 220 may acquire induced currents formed on the antenna units by the electromagnetic signal received by respective antenna units among the N antenna units, and compare values of the induced currents of the electromagnetic signals received by respective antenna units, so as to select M target antenna units with the highest values of currents of the received electromagnetic signals from the N antenna units.

Further, the signal comparison module 220 may output information for indicating the M target antenna units to the signal switching module 230. Specifically, the at least one output port of the signal comparison module 220 may be coupled to the signal switching module 230. Thus, the signal comparison module 220 may output the information for indicating the M target antenna units to the signal switching module 230 through the at least one output port.

In some embodiments, the information for indicating the M target antenna units may include M identifiers of the M target antenna units. The M identifiers correspond to the M target antenna units one by one, and an identifier is used to uniquely indicate a target antenna unit. Exemplarily, the identifier may be a character number of the target antenna unit, such as a digital number. Of course, the identifier may also be another identifier used to distinguish respective antenna units.

### Signal Switching Module 230

The signal switching module 230 is configured to receive the information output by the signal comparison module 220 for indicating the M target antenna units, and based on the information for indicating the M target antenna units, and select the M target antenna units to transmit the electromagnetic signal.

In some embodiments, the signal switching module 230 is composed of a switching circuit. The switching circuit is connected to the antenna module 210, and the information for indicating the M target antenna units sent from the signal comparison module 220 may be received through an input port of the switching circuit. Therefore, the signal switching module 230 may switch a connection state of an output port based on the information, so that the electromagnetic signal is transmitted through the M target antenna units.

The signal switching module 230 may determine that a number of target antenna units is M and determine the identifiers of the M target antenna units based on the information for indicating the M target antenna units sent from the signal comparison module 220. Furthermore, the signal switching module 230 may switch the connection state of the output port based on the identifiers of the M target antenna units, so that the electromagnetic signals are transmitted through the M target antenna units.

Exemplarily, the signal switching module 230 may include N output ports, where the N output ports are respectively connected to the N antenna units in the antenna module 210, and the N output ports have a one-to-one correspondence with the N antenna units in the antenna module 210. The signal switching module 230 may determine M output ports of the signal switching module 230 corresponding to the M target antenna units based on the identifiers of the M target antenna units, so that an output signal of the signal switching module 230 is output through the M output units.

Taking a switching process of an output port as an example, if an output signal of the switching circuit is output from an x-th output port, and an output of the x-th output port is connected to an x-th antenna unit among N antenna units, after receiving the information for indicating the M target antenna units, it may be switched to output an output signal of the switching circuit from the y-th output port, and the output of the y-th output port is connected to the y-th target antenna unit among the M target antenna units, so that the y-th target antenna unit may be configured to transmit or receive electromagnetic signals.

Based on the above embodiments, the communication apparatus may determine and adjust the target antenna units for transmitting or receiving signals based on the received signal strength, and may implement beamforming of the transmitted signals without channel measurement and feedback. Thereby, the computing resources, hardware cost and computing delay required for channel measurement and feedback are saved, and the transmission distance of backscattered signals may be improved.

### Signal Processing Module 240

As shown in FIG. 5, the communication apparatus 200 may further include a signal processing module 240, where the signal processing module 240 is coupled to the signal switching module 230.

The signal processing module 240 is configured to analyze a received signal to acquire information carried by the received signal.

Exemplarily, the signal switching module 230 is further configured to: acquire a first signal received by the M target antenna units, and output the first signal to the signal processing module 240. Therefore, the signal processing module 240 is configured to: analyze the first signal to acquire information carried by the first signal.

In some embodiments, the communication apparatus 200 has a plurality of working modes, and the plurality of working modes may include a communication mode, an energy transmission mode, or other possible working modes. Thus, the first signal may carry working mode indication information, and the working mode indication information is used to indicate the communication apparatus to enter a target working mode. The working mode information may include an identifier corresponding to the target working mode. For example, the identifier may be a number or a name of a working mode.

Herein, the communication apparatus 200 in the communication mode is configured to transmit information. The communication apparatus 200 in the energy transmission mode is configured to convert an external electromagnetic signal into electrical energy and store the electrical energy.

Of course, the first signal may also carry other information, for example, the first signal may carry network information such as a network identifier and a network type, device information such as a terminal type and terminal configuration, and information related to services such as a service type and service data, or other possible information.

In some embodiments, the signal processing module 240 is further configured to generate a signal based on the acquired information. As shown in FIG. 5, the signal processing module 240 may further be coupled to the signal comparing module 220.

The signal processing module 240 is further configured to receive the information output by the signal comparison module 220 for indicating the M target antenna units. Furthermore, based on the information for indicating the M target antenna units, a second signal is generated and output to the signal switching module 230.

Therefore, the signal switching module 230 is further configured to: output the received second signal to the M target antenna units, so as to transmit the second signal through the M target antenna units.

In some embodiments, information carried by the second signal is configured to respond to information carried by the first signal. For example, the first signal carries working mode indication information for indicating the communication mode of the communication apparatus 200, and the second signal carries response information of the working mode indication information.

Of course, the information carried by the second signal may not be used to respond to the information carried by the first signal, but may be network information, device information, information related to services, etc.

In some embodiments, the signal processing module 240 further has signal processing capabilities such as encoding, decoding, modulation, and demodulation.

### Energy Management Module 250

As shown in FIG. 6, the communication apparatus 200 may further include an energy management module 250, and the energy management module 250 is configured to supply power to the communication apparatus. The energy management module 250 is coupled to the signal processing module 240.

In some embodiments, the signal switching module 230 is further configured to: acquire a third signal received by the M target antenna units, and output the third signal to the signal processing module 240. Herein, the third signal carries the working mode indication information for indicating the energy transmission mode of the communication apparatus 200.

In the energy transmission mode of the communication apparatus 200, the signal processing module 240 is further configured to output the third signal to the energy management module 250.

Therefore, the energy management module 250 is configured to convert the third signal into electrical energy and store the electrical energy.

In some embodiments, the energy management module 250 may include an energy conversion circuit and an energy storage unit. Herein, the energy conversion circuit may convert an electromagnetic signal into electrical energy. The energy storage unit may be configured to store the electrical energy converted by the energy conversion circuit. Exemplarily, the energy storage unit may be composed of a rechargeable battery.

In some embodiments, the energy management module 250 may further include an energy management circuit, where the power supply management circuit is configured to control charging and discharging of the energy management module 250.

It should be noted that the communication apparatus is added with an energy management module, and based on the energy management module, the received electromagnetic signals may be converted into electrical energy and stored. In this way, the stored electrical energy may be used to supply power to the entire communication apparatus, thereby increasing the signal transmission power and also improving the communication distance and communication rate of the backscatter communication.

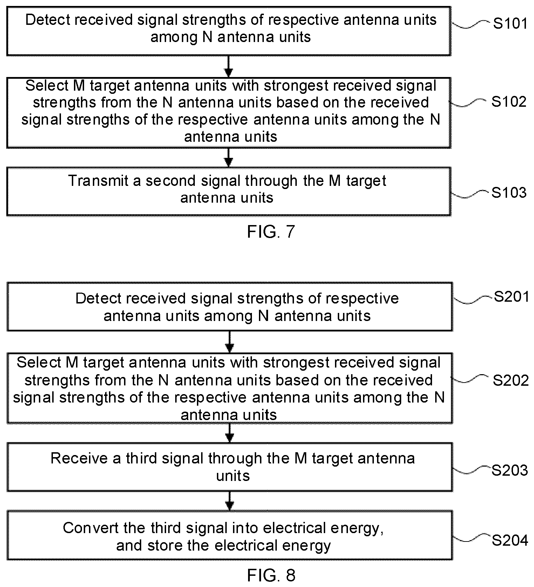

In some embodiments, a communication method is further provided in the embodiments of the present disclosure, and the method is applied to a communication apparatus 200. As shown in FIG. 7, when the communication apparatus 200 is in a communication mode, the method includes S101-S103.

In S101, received signal strengths of respective antenna units among N antenna units are detected.

Herein, the communication apparatus 200 includes the N antenna units.

Furthermore, since angles at which respective antennas among the N antenna units receive and transmit an electromagnetic signal are fixed, the received signal strengths of respective antenna units are different for a same received electromagnetic signal.

In S102, M target antenna units with strongest received signal strengths are selected from the N antenna units based on the received signal strengths of the respective antenna units among the N antenna units.

Herein, M is a positive integer less than or equal to N.

It should be noted that when receiving electromagnetic signals, the communication apparatus 200 may detect the received signal strengths of respective antenna units among the N antenna units, and compare the received signal strength of respective antenna units, and select the M target antenna units with the strongest received signal strengths. Based on the M target antenna units with the strongest received signal strengths, a direction of an incoming wave of the signal may be determined. Furthermore, a signal is sent to a device that sends the signal through the M target antenna units, and a direction of an emitted beam is opposite to the direction of the incoming wave, thereby implementing uplink and downlink communication.

Therefore, the communication apparatus 200 may transmit or receive a signal based on the selected M target antenna units.

In some embodiments, the communication apparatus 200 may further receive the first signal through the M target antenna units. The information carried by the first signal includes indication information for indicating the communication apparatus 200 to enter a communication mode.

In turn, based on the information, the communication apparatus 200 may enter the communication mode.

In S103, a second signal is transmitted through the M target antenna units.

The communication apparatus 200 may acquire information for indicating the M target antenna units with the strongest signal strength, and switch to the M target antenna units to transmit an electromagnetic signal based on the information.

In some embodiments, a signal carried by the second signal may be used to respond to information carried by the received first signal.

Based on the communication method shown in FIG. 7, the target antenna unit for transmitting or receiving a signal may be determined and adjusted based on the received signal strength, thereby saving the computing resources, hardware costs, and computing delays required for channel measurement and feedback.

In some embodiments, another communication method is further provided in the present disclosure, as shown in FIG. 8, the method includes S201-S204.

In S201, received signal strengths of respective antenna units among N antenna units are detected.

In S202, M target antenna units with strongest received signal strengths are selected from the N antenna units based on the received signal strengths of the respective antenna units among the N antenna units.

In some embodiments, the communication apparatus 200 may further receive a first signal through M target antenna units. Herein, information carried by the first signal may further include indication information for indicating the communication apparatus 200 to enter an energy transmission mode.

Furthermore, based on the information, the communication apparatus 200 may enter the energy transmission mode.

In S203, a third signal is received through the M target antenna units.

In S204, the third signal is converted into electrical energy, and the electrical energy is stored.

In some embodiments, the communication apparatus 200 may be provided with a rechargeable battery for storing energy. The communication apparatus 200 may convert the received third signal into electrical energy, and store the converted electrical energy into the rechargeable battery, thereby supplying power to the communication apparatus 200.

In some embodiments, the communication apparatus may further transmit a second signal through the M target antenna units. Herein, a signal carried by the second signal may be used to respond to information carried by a first signal.

Based on the above-mentioned communication method, the received electromagnetic signals may be converted into electrical energy and stored to be used to supply power to the entire communication apparatus. In this way, the signal transmission power may be increased, and the communication distance and communication capacity of backscatter communication may also be improved.

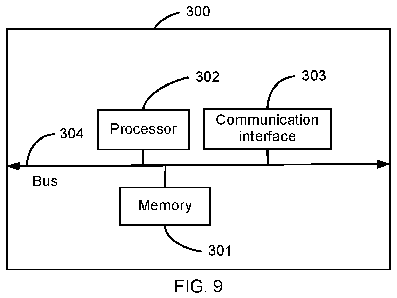

In a case where functions of various modules of the above-mentioned communication apparatus 200 are implemented in the form of hardware, an electronic device 300 is further provided in the embodiments of the present disclosure, and the electronic device 300 is configured to implement the communication method provided in the present disclosure. As shown in FIG. 9, the electronic device 300 includes: a communication interface 303, a processor 302, and a bus 304. Optionally, the communication apparatus may further include a memory 301.

The processor 302 may be any of various exemplary logical blocks, modules and circuits described for implementing or executing the embodiments of the present disclosure. The processor 302 may be a central processor, a general-purpose processor, a digital signal processor, an application specific integrated circuit, a field programmable gate array, or other programmable logic component, a transistor logic component, a hardware assembly, or any combination thereof. The processor 302 may implement or execute various exemplary logical blocks, modules and circuits described in conjunction with the embodiments of the present disclosure. The processor 302 may also be a combination that implements computing functions, for example, the processor 302 includes a combination of one or more microprocessors, a combination of a DSP (digital signal processor) and a microprocessor, or the like.

The communication interface 303 is used to connect to other devices through a communication network. The communication network may be the Ethernet, a wireless access network, a wireless local area network (wireless local area network, WLAN), or the like.

The memory 301 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic disk storage devices, or any other medium that can be used to carry or store desired program codes with instructions or data and can be accessed by a computer, which is not limited thereto.

As a possible implementation, the memory 301 may exist independently from the processor 302, and the memory 301 may be connected to the processor 302 through the bus 304, and is configured to store instructions or program codes (e.g., computer program instructions, etc.) that are executable for the processor 302. When the processor 302 invokes and executes the instructions or program codes stored in the memory 301, the processor 302 may implement the communication method provided in the embodiments of the present disclosure.

In another possible implementation, the memory 301 may be integrated with the processor 302.

The bus 304 may be an extended industry standard architecture (EISA) bus, or the like. The bus 304 may be classified as an address bus, a data bus, a control bus, or the like. For ease of representation, only one bold line is used in FIG. 9 for representing the bus 304, but it does not mean that there is only one bus or one type of bus.

A computer-readable storage medium (e.g., a non-transitory computer-readable storage medium) is provided in some embodiments of the present disclosure, the computer-readable storage medium has stored computer program instructions, and the computer program instructions, upon being executed on a computer (e.g., the above-mentioned communication apparatus, the processor of the communication apparatus or the environment reflection function module), enable the computer to perform the transmission method for environment reflection as described in any one of the above-mentioned embodiments. It should be understood that the present disclosure does not limit a specific form of the computer.

In some examples, the above-mentioned computer-readable storage medium may include, but not limited to: a magnetic storage device (e.g., a hard disk, a floppy disk, or a magnetic tape, etc.), an optical disk (e.g., a compact disk (Compact Disk, CD), a digital versatile disk (Digital Versatile Disk, DVD), etc.), a smart card and a flash memory device (e.g., an erasable programmable read-only memory (Erasable Programmable Read-Only Memory, EPROM), a card, a stick or a key driver, etc.). The various computer-readable storage medium described in the present disclosure may represent one or more devices for storing information and/or other machine-readable storage medium for storing information. The term "machine-readable storage medium" may include, but not limited to, a wireless channel and various other medium capable of storing, containing, and/or carrying instructions and/or data.

The embodiments of the present disclosure provide a computer program product including instructions, when the computer program product is run on a computer, the computer is enabled to perform the communication method as described in any embodiment of the above-mentioned embodiments.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A communication apparatus, **characterized by** the communication apparatus comprises:
an antenna module, comprising N antenna units configured to transmit and receive an electromagnetic signal, wherein N is a positive integer greater than 1;
a signal comparison module, wherein the signal comparison module is coupled to the antenna module, and the signal comparison module is configured to: detect received signal strengths of respective antenna units among the N antenna units; and select M target antenna units with strongest received signal strengths from the N antenna units based on the received signal strengths of the respective antenna units among the N antenna units, wherein M is a positive integer less than or equal to N;
a signal switching module, wherein the signal switching module is coupled to the signal comparison module and the antenna module, respectively, and the signal switching module is configured to: receive information output by the signal comparison module for indicating the M target antenna units; and select the M target antenna units to transmit an electromagnetic signal based on the information for indicating the M target antenna units.

2. The communication apparatus according to claim 1, wherein the antenna module comprises a first array and a second array; the N antenna units are arranged in the first array, and the second array comprises K transmission units for changing a physical state of an electromagnetic signal, K is a positive integer greater than 1, and the physical state of the electromagnetic signal includes one or more of: an amplitude, a phase, or a polarization direction.

3. The communication apparatus according to claim 1, wherein the antenna module comprises a first function device, a second function device and a third function device;
the N antenna units are arranged on the first function device;
the second function device includes L feed ports;
the third function device includes P antenna elements; L and P are both positive integers greater than 1; each antenna element is coupled to a feed port through a delay line, and is configured to change a physical state of an electromagnetic signal received from the feed port, and the physical state of the electromagnetic signal includes one or more of: an amplitude, a phase, or a polarization direction;
wherein the first function device, the second function device and the third function device are sequentially spaced in a first direction, and the second function device is located between the first function device and the third function device.

4. The communication apparatus according to any one of claims 1 to 3, wherein a received signal strength of an antenna unit is represented by a voltage, a current or a power of an electromagnetic signal received by the antenna unit.

5. The communication apparatus according to any one of claims 1 to 3, wherein the information for indicating the M target antenna units comprises identifiers of the M target antenna units.

6. The communication apparatus according to claim 5, wherein the communication apparatus further comprises: a signal processing module, wherein the signal processing module is coupled to the signal switching module;
the signal switching module is further configured to: acquire a first signal received by the M target antenna units; and output the first signal to the signal processing module;
the signal processing module is configured to: analyze the first signal to acquire information carried by the first signal.

7. The communication apparatus according to claim 6, wherein
the signal processing module is further coupled to the signal comparison module, and the signal processing module is further configured to: receive the information output by the signal comparison module for indicating the M target antenna units; generate a second signal based on the information for indicating the M target antenna units; and output the second signal to the signal switching module;
the signal switching module is further configured to: output the second signal to the M target antenna units, so as to transmit the second signal through the M target antenna units.

8. The communication apparatus according to claim 7, wherein information carried by the second signal is used to respond to the information carried by the first signal.

9. The communication apparatus according to claim 6, wherein the communication apparatus further comprises an energy management module, and the energy management module is configured to supply power to the communication apparatus.

10. The communication apparatus according to claim 9, wherein the energy management module is coupled to the signal processing module;
the signal switching module is further configured to: acquire a third signal received by the M target antenna units; and output the third signal to the signal processing module;
the signal processing module is further configured to: output the third signal to the energy management module;
the energy management module is configured to: convert the third signal into electrical energy, and store the electrical energy.

11. The communication apparatus according to claim 10, wherein the communication apparatus has a plurality of working modes, and the plurality of working modes include a communication mode and an energy transmission mode;
the communication apparatus in the communication mode is configured to transmit information;
the communication apparatus in the energy transmission mode is configured to convert an external electromagnetic signal into electrical energy, and store the electrical energy.

12. The communication apparatus according to claim 11, wherein the information carried by the first signal comprises working mode indication information, and the working mode indication information is used to indicate the communication apparatus to enter the communication mode or the energy transmission mode.

13. A communication method, **characterized in that** the method is applied to a communication apparatus, the communication apparatus comprises N antenna units configured to transmit an electromagnetic signal, N is a positive integer greater than 1; the method comprises:
detecting received signal strengths of respective antenna units among the N antenna units;
selecting M target antenna units with strongest received signal strengths from the N antenna units based on the received signal strengths of the respective antenna units among the N antenna units; wherein M is a positive integer less than or equal to N;
transmitting a second signal through the M target antenna units.

14. The method according to claim 13, wherein the method further comprises:
receiving a first signal through the M target antenna units;
analyzing the first signal to acquire information carried by the first signal.

15. The method according to claim 14, wherein the information carried by the first signal comprises indication information for indicating the communication apparatus to enter a communication mode.

16. The method according to claim 14, wherein a signal carried by the second signal is used to respond to the information carried by the first signal.

17. A communication method, **characterized in that** the method is applied to a communication apparatus, the communication apparatus comprises N antenna units configured to transmit an electromagnetic signal, N is a positive integer greater than 1; the method comprises:
detecting received signal strengths of respective antenna units among the N antenna units;
selecting M target antenna units with strongest received signal strengths from the N antenna units based on the received signal strengths of the respective antenna units among the N antenna units; wherein M is a positive integer less than N;
receiving a third signal through the M target antenna units;
converting the third signal into electrical energy and storing the electrical energy.

18. The method according to claim 17, wherein the method further comprises:
receiving a first signal through the M target antenna units;
analyzing the first signal to acquire information carried by the first signal.

19. The method according to claim 18, wherein the information carried by the first signal comprises indication information for indicating the communication apparatus to enter an energy transmission mode.

20. The method according to claim 18, wherein the method further comprises:
transmitting a second signal through the M target antenna units.

21. The method according to claim 20, wherein a signal carried by the second signal is used to respond to the information carried by the first signal.

22. An electronic device, **characterized by** comprising the communication apparatus according to any one of claims 1 to 12.

23. A communication system, **characterized in that** the communication system comprises at least one receiving end and at least one transmitting end, wherein the receiving end and/or the transmitting end comprises the communication apparatus according to any one of claims 1 to 12.

24. A computer-readable storage medium, wherein the computer-readable storage medium has stored computer instructions thereon, when the computer instructions are executed on an electronic device, so as to enable the electronic device to perform the communication method according to any one of claims 13 to 21.
